# EUROPEAN PATENT SPECIFICATION

(11) **EP 1 993 161 B1**
(45) Date of publication and mention of the grant of the patent: **24.07.2013**
(21) Application number: 07715273.4
(22) Date of filing: 28.02.2007
(51) Int. Cl.: H01M 10/04, H01M 2/26, H01M 10/28

(54) **BATTERY, AND BATTERY MANUFACTURING METHOD**
BATTERIE UND BATTERIEHERSTELLUNGSVERFAHREN
BATTERIE ET SON PROCEDE DE FABRICATION

(30) Priority: 07.03.2006 JP 2006060688
(43) Date of publication of application: 19.11.2008
(73) Proprietor: TOYOTA JIDOSHA KABUSHIKI KAISHA, Toyota-shi, Aichi-ken, 471-8571 (JP)
(72) Inventor: ASAHINA, Takashi, Kosai-shi, Shizuoka 4310452 (JP); HAMADA, Shinji, Kosai-shi, Shizuoka 4310452 (JP); ETO, Toyohiko, Shizuoka-ken, 431-0422 (JP); ITO, Masanori, Aichi 4718571 (JP)
(74) Representative: TBK
(86) International application number: PCT/JP2007/054382
(87) International publication number: WO 2007/102527

(56) References cited:
- JP-A- 2001 093 505
- JP-A- 2002 184 386
- JP-A- 2003 346 772
- US-A1- 2004 170 891
- US-B1- 6 761 993

## Description

### Technical Field

The present invention relates to a battery comprising an electrode plate assembly constituted by alternately laminating a plurality of first electrode plates of the same shape as each other and a plurality of second electrode plates different in electric potential from the first electrode plates with separators interposed therebetween, and relates to a manufacturing method thereof.

### Background Art

Heretofore, a number of batteries has been proposed, each of which comprises an electrode plate assembly constituted by alternately laminating a plurality of first electrode plates of the same shape as each other and a plurality of second electrode plates different in electric potential from the first electrode plates with separators interposed therebetween (for example, see Patent document JP2001-93505A, equivalent is US 6 761 993 B1, referred to hereinafter also as Patent Document 1).

In the battery of Patent Document 1, a plurality of positive electrode plates constituting an electrode plate group (an electrode plate assembly) is connected to a current collector and a plurality of negative electrode plates is connected to a current collector. Accordingly, the current collector can collect positive electric charge from the positive electrode plates and collect negative electric charge from the negative electrode plates.

### Disclosure of Invention

### PROBLEMS TO BE SOLVED BY THE INVENTION

Meanwhile, in the battery of Patent Document 1, the negative electrode plates (the first electrode plates) include two outermost first electrode plates that are located in outmost positions in a lamination direction of the electrode plate group (the electrode plate assembly) and have a bent shape. Specifically, each outermost first electrode plate is designed to be bent at a bent portion farther from the current collector than its own lead portion (joint end) so that a near portion extending from the bent portion to the joint end is positioned inward in the lamination direction than a distant portion positioned farther from the current collector than the bent portion.

However, the first electrode plates constituting the electrode plate assembly including the outermost first electrode plates have the same shape as each other and therefore the above configured outermost first electrode plates could not reach the current collector well due to the bent shape as compared with other first electrode plates. Thus, the outermost first electrode plates could not easily be connected to the current collector. In Patent Document 1, furthermore, the joint ends of the first electrode plates and the current collector are connected to each other with a brazing material. This would cause problems in the cost of brazing material and the time for reflowing the brazing material to the current collector, resulting in an excessive manufacturing cost.

The present invention has been made to solve the above problems and has a purpose to provide a low-cost battery in which an outermost first electrode plate is designed to be bent at a bent portion farther from a current collector than its own joint end so that a near portion extending from the bent portion to the joint end is positioned inward in a lamination direction than a distant portion positioned farther from the current collector than this bent portion, and in which first electrode plates including the outermost first electrode plate are connected to a current collector joint part without use of a joining member such as a brazing material, and a manufacturing method thereof.

This is achieved by a battery according to claim 1 and a manufacturing method according to claim 4. Advantageous further developments are as set forth in the dependent claims.

### MEANS FOR SOLVING THE PROBLEMS

According to one aspect, there is provided a battery comprising: an electrode plate assembly including a plurality of first electrode plates of the same shape as each other and a plurality of second electrode plates different in electric potential from the first electrode plates, which are laminated alternately with separators interposed therebetween; and a current collector connected to each of the first electrode plates to collect electric charge from the first electrode plates, the current collector including a collector joint part connected to a joint end of each first electrode plate; wherein the plurality of first electrode plates includes: two outermost first electrode plates located in outermost places in a lamination direction of the electrode plate assembly; and at least one inside first electrode plate located between the two outermost first electrode plates; each of the outermost first electrode plates is designed to be bent at a bent portion farther from the collector joint part than the joint end of each first electrode plate so that a near portion extending from the bent portion to the joint end is positioned inward in the lamination direction than a distant portion positioned farther from the collector joint part than the bent portion, the collector joint part is connected to the joint end of the inside first electrode plate through a melted portion of the collector joint part itself and connected to the joint end of each outermost first electrode plate through a melted portion of the collector joint part itself, the current collector includes: an inside part with which the joint end of the inside first electrode plate will be placed in contact, and outermost parts each of which is located outside the inside part in the lamination direction and protrudes toward the distant portion of each outermost first electrode plate than the inside part, each outermost part being to be placed in contact with the joint end of each outermost first electrode plate, the inside part and the outermost parts are connected to the joint end of the inside first electrode plate and the joint end of the outermost first electrode plates in such a manner that the joint end of the inside first electrode plate is placed in contact with the inside part of the current collector and the joint ends of the outermost first electrode plates are placed in contact with the outermost parts of the current collector, an energy beam is applied to the inside part and the outermost parts of the current collector from an opposite side from the first electrode plates to melt the inside part and the outermost parts.

In the battery of according to one aspect, each outermost first electrode plate is designed to be bent at the bent portion farther from the collector joint part than the own joint end so that the near portion extending from the bent portion to the joint end is positioned inward in the lamination direction than the distant portion positioned farther from the collector joint part than the bent portion. With such configuration, the size of the collector joint part in the lamination direction can be made smaller than the size of the electrode plate assembly in the lamination direction. Accordingly, the current collector can be made so small in size in the lamination direction as to be equal to the electrode plate assembly, thereby achieving battery size reduction.

In the battery of according to one aspect, furthermore, the collector joint part is melted itself and connected to the joint end of the inside first electrode plate and also to the joint end of each outermost electrode plate. In the battery of according to one aspect, specifically, the outermost first electrode plates as well as the inside first electrode plate are connected to the collector joint part through molten metal of the collector joint part itself without use of a joining member such as a brazing material. This connection between the first electrode plates and the current collector using no joining member such as a brazing material can eliminate the need for the joining member such as brazing material and save the time for reflowing the brazing material and the like, resulting in a cost reduction.

Meanwhile, the plurality of first electrode plates (the inside first electrode plate and the outermost first electrode plates) constituting the electrode plate assembly have the same shape as each other and therefore the above designed outermost first electrode plates may not reach (may not be connected to) the collector joint part sufficiently due to the bent shape as compared with the inside first electrode plate. In Patent Document 1, the joining member such as a brazing material is used to connect the joint ends of the first electrode plates to the current collector and accordingly even the outermost first electrode plate designed as above could be connected to the current collector through the brazing material or the like.

According to one aspect, on the other hand, the current collector includes the inside part with which the joint end of the inside first electrode plate is placed in contact, and the outermost parts each of which is located outside the inside part in the lamination direction and protrudes toward the distant portion of each outermost first electrode plate than the inside part, each outermost part being to be placed in contact with the joint end of each outermost first electrode plate. With the use of such current collector including the outermost sections each protruding from the inside section toward the distant portion of each outermost first electrode plate, the outermost first electrode plate in bent form can be placed appropriately in contact with the current collector as with the inside first electrode plate.

According to one aspect, furthermore, the joint end of the inside first electrode plate is placed in contact with the inside part of the current collector and the joint end of each outermost first electrode plate is placed in contact with each outermost part of the current collector, and then the inside part and the outermost parts of the current collector are externally irradiated by the energy beam from the opposite side from the first electrode plates to melt the inside part and the outermost parts. This can form the collector joint part connected to the joint end of the inside first electrode plate and to the joint end of each outermost first electrode plate.

It is to be noted that the first electrode plates are positive electrode plates or negative electrode plates. At least ones (first electrode plates) of the positive electrode plates and the negative electrode plates have only to be connected to the current collector as mentioned above. In other words, the battery according to one aspect may include a battery in which only the negative electrode plates are connected to the current collector as above, a battery in which only positive electrode plates are connected to the current collector as above, or a battery in which both the positive electrode plates and the negative electrode plates are connected to the current collectors respectively as above.

Furthermore, in the above battery, preferably, the collector joint part is connected to the joint end of the inside first electrode plate with a fillet formed of metal melted from the collector joint part itself and connected to the joint end of each outermost first electrode plate with a fillet formed of metal melted from the collector joint part itself.

In the battery of the according to one aspect, the joint end of each first electrode plate (the inside first electrode plate and the outermost first electrode plates) and the collector joint part are connected with the fillet. Accordingly, each first electrode plate and the current collector are connected firmly and therefore the battery can have higher connecting reliability between the first electrode plates and the current collector.

Furthermore, in any one of the above batteries, preferably, the current collector includes an extended part extending toward the distant portion of each outermost first electrode plate, the extended part being configured to be in contact with an outer surface of the near portion, which is included in an outer surface of each outermost first electrode plate facing outward in the lamination direction, and to hold the outermost first electrode plate so that the near portion is positioned inward in the lamination direction than the distant portion.

In the battery of the invention, the current collector includes the extended parts each extending toward the distant portion of each outermost first electrode plate. Since this extended part is placed in contact with the outer surface of the near portion, which is included in the outer surface of the outermost first electrode plate, the outermost first electrode plate can be held appropriately in a position so that the near portion is positioned on the inner side in the lamination direction than the distant portion. In addition, the extended part receive a force of the near portion of the outermost first electrode plate that attempts to move outward in the laminated direction by a restoring force of the bent portion. Accordingly, any force is unlikely to be applied to the connecting portion between the joint end of the outermost first electrode plate and the collector joint part, thus maintaining a good connecting relation.

According to another aspect, the invention provides a manufacturing method of a battery comprising: an electrode plate assembly including a plurality of first electrode plates of the same shape as each other and a plurality of second electrode plates different in electric potential from the first electrode plates, which are laminated alternately with separators interposed therebetween; and a current collector connected to each of the first electrode plates to collect electric charge from the first electrode plates, the current collector including a collector joint part connected to a joint end of each first electrode plate; wherein the plurality of first electrode plates includes: two outermost first electrode plates located in outermost places in a lamination direction of the electrode plate assembly; and at least one inside first electrode plate located between the two outermost first electrode plates; each of the outermost first electrode plates is designed to be bent at a bent portion farther from the collector joint part than the joint end of each first electrode plate so that a near portion extending from the bent portion to the joint end is positioned inward in the lamination direction than a distant portion positioned farther from the collector joint part than the bent portion, the collector joint part is connected to the joint end of the inside first electrode plate through a melted portion of the collector joint part itself and connected to the joint end of each outermost first electrode plate through a melted portion of the collector joint part itself, wherein the current collector before being connected includes: an inside part with which the joint end of the inside first electrode plate will be placed in contact, and outermost parts each of which is located outside the inside part in the lamination direction and protrudes toward the distant portion of each outermost first electrode plate than the inside part, each outermost part being to be placed in contact with the joint end of each outermost first electrode plate, the method comprises a welding step for welding the current collector and the first electrode plates, the welding step including: placing the joint end of the inside first electrode plate in contact with the inside part of the current collector and the joint ends of the outermost first electrode plates in contact with the outermost parts of the current collector, applying an energy beam to the inside part and the outermost parts of the current collector from an opposite side from the first electrode plates to melt the inside part and the outermost parts, and forming the collector joint part connected to the joint end of the inside first electrode plate and connected to the joint ends of the outermost first electrode plates.

The manufacturing method of the invention is to manufacture the battery adapted such that each of the outermost first electrode plates is designed to be bent at the bent portion farther from the collector joint part than the own joint end so that the near portion extending from the bent portion to the joint end is positioned inward in the lamination direction than the distant portion positioned farther from the collector joint part than the bent portion.

With such configuration, the collector joint part can be made smaller in size in the lamination direction than the electrode plate assembly. Accordingly, the current collector can be made so small in size in the lamination direction as to be equal to the electrode plate assembly, thereby achieving battery size reduction.

However, the plurality of first electrode plates (the inside first electrode plate and the outermost first electrode plates) constituting the electrode plate assembly have the same shape as each other and therefore the above designed outermost first electrode plates may not reach (may not be connected to) the collector joint part sufficiently due to the bent shape as compared with the inside first electrode plate. In Patent Document 1, the joining member such as a brazing material is used to connect the joint ends of the first electrode plates to the current collector and accordingly even the outermost first electrode plate designed as above could be connected to the current collector through the brazing material or the like.

In the manufacturing method of the invention, on the other hand, the current collector before being connected includes the inside part with which the joint end of the inside first electrode plate will be placed in contact, and the outermost parts each of which is located outside the inside part in the lamination direction and protrudes toward the distant portion of each outermost first electrode plate than the inside part, each outermost part being to be placed in contact with the joint end of each outermost first electrode plate,. With the use of such current collector including the outermost sections each protruding toward the distant portion of each outermost first electrode plate than the inside section, the outermost first electrode plate in bent form can be placed appropriately in contact with the current collector as with the inside first electrode plate.

In the manufacturing method of the invention, furthermore, the joint end of the inside first electrode plate is placed in contact with the inside part of the current collector and the joint end of each outermost first electrode plate is placed in contact with each outermost part of the current collector, and then the inside part and the outermost parts of the current collector are externally irradiated by the energy beam from the opposite side from the first electrode plates to melt the inside part and the outermost parts. This can form the collector joint part connected to the joint end of the inside first electrode plate and to the joint end of each outermost first electrode plate.

As above, the manufacturing method of the invention, unlike the conventional manufacturing method, can connect the first electrode plates and the current collector without use of the joining member such as a brazing material. It is accordingly possible to eliminate the need for the joining member such as a brazing material and save the time for reflowing the brazing material, thereby achieving manufacturing cost reduction.

It is to be noted that the first electrode plates are the positive electrode plates or the negative electrode plates. The manufacturing method of the invention has only to be applied to at least either ones (first electrode plates) of the positive electrode plates and the negative electrode plates. In other words, the manufacturing method of the invention may include a manufacturing method of connecting only the negative electrode plates to the current collector as above, a manufacturing method of connecting only the positive electrode plates to the current collector as above, or a manufacturing method of connecting the positive electrode plates and the negative electrode plates to the current collectors respectively as above.

The energy beam to be applied may include an electron beam, a laser beam, and other. However, an electron beam is preferable.

In the above battery manufacturing method, preferably, the welding step includes forming the collector joint part connected to the joint end of the inside first electrode plate with a fillet and connected to the joint ends of the outermost first electrode plates with a fillet.

The manufacturing method of the invention includes forming the collector joint part connected not only to the joint end of the inside first electrode plate but also to the joint ends of the outermost first electrode plates with fillets respectively. Each of the first electrode plates is connected to the current collector with the fillets in this way, so that the first electrode plates and the current collector are connected firmly. Accordingly, according to the manufacturing method of the invention, a battery with high connecting reliability between the first electrode plates and the current collector can be manufactured.

In any one of the above battery manufacturing methods, preferably, the current collector includes an extended part extending toward the distant portion of each outermost electrode plate, the welding step includes: placing an outer surface of the near portion, which is included in an outer surface of each outermost first electrode plate facing outward in the lamination direction, into contact with the extended part; holding each outermost first electrode plate so that the near portion is positioned inward in the lamination direction than the distant portion; and applying the energy beam to the inside part and the outermost parts of the current collector from the opposite side from the first electrode plates.

In the manufacturing method of the invention, the current collector used therein includes the extended parts each extending toward the distant portion of each outermost electrode plate. The outer surface of the near portion of each first electrode plate is placed in contact with each extended part, and each outermost first electrode plate is held so that the near portion is positioned inward in the lamination direction than the distant portion. Then, the energy beam is irradiated to a predetermined portion of the current collector. Consequently, in the configuration where the near portion of each outermost first electrode plate is positioned inward in the lamination direction than the distant portion, the outermost first electrode plates and the current collector can be connected (welded) easily and appropriately.

After connection, furthermore, the extended part receive the force of the near portion of each outermost first electrode plate that attempts to move outward in the lamination direction due to the restoring force of the bent portion. Accordingly, any force is unlikely to be applied to the connecting portion between the joint end of each outermost first electrode plate and the collector joint part, thereby maintaining a good connecting relation.

In any one of the above battery manufacturing methods, preferably, the inside part of the current collector before being connected includes an inside recessed portion recessed when viewed from an electrode plate assembly side and first and second raised portions arranged on both sides of the inside recessed portion and raised toward the electrode plate assembly, and each of the outermost parts of the current collector before being connected includes an outermost recessed portion recessed when viewed from the electrode plate assembly side and first and second outermost raised portions arranged on both sides of the outermost recessed portion and raised toward the electrode plate assembly, the welding step includes: placing the joint end of the inside first electrode plate in contact with the first and second inside raised portions and placing the joint ends of the outermost first electrode plates in contact with the first and second outermost raised portions, and applying the energy beam to the inside part and the outermost parts from the opposite side from the first electrode plates.

In the manufacturing method of the invention, the inside part of the current collector not connected yet includes the inside recessed portion recessed when viewed from the electrode plate assembly side and the first and second raised portions arranged on both sides of the inside recessed portion and raised toward the electrode plate assembly. Each outermost part includes the outermost recessed portion recessed when viewed from the electrode plate assembly side and the first and second outermost raised portions arranged on both sides of the outermost recessed portion and raised toward the electrode plate assembly. It is therefore possible to place the joint end of the inside first electrode plate in contact with the first and second inside raised portions and to place the joint end of the outermost first electrode plate in contact with the first and second outermost raised portions.

In other words, the inside first electrode plates can be placed in contact with the inside part at two points (the first and second inside raised portions) interposing the inside recessed portion therebetween and all of outermost first electrode plates can be placed in contact with the outermost part at two points (the first and second outermost raised portions) interposing the outermost recessed portion therebetween. The inside part and the outermost parts in this state are irradiated by the energy beam from the opposite side from the first electrode plates. Accordingly, the inside part and the outermost parts can be melted appropriately to connect to the joint ends of the inside first electrode plate and the outermost first electrode plates.

### BRIEF DESCRIPTION OF DRAWINGS

Fig. 1 is a front view of a battery 100 in a preferred embodiment;
Fig. 2 is a side view of the battery 100 in the embodiment;
Fig. 3 is a sectional view of the battery 100 in the embodiment, corresponding to a sectional view along a line A-A in Fig. 2;
Fig. 4 is a sectional view of an electrode plate assembly 150 connected to a positive current collector 120 and a negative current collector 130;
Fig. 5 is an enlarged sectional view of a negative electrode plate 170 connected to the negative current collector 130, corresponding to an enlarged view of a part B in Fig. 4;
Fig. 6 is a side view of the negative current collector 130;
Fig. 7 is a front view of the negative current collector 130;
Fig. 8 is an explanatory view to explain a welding process in the embodiment, showing a sectional view along a line E-E in Fig. 6 (an enlarged view of a region corresponding to the part B in Fig. 4, before welding), in which the negative electrode plates 170 contact with the negative current collector 130;
Fig. 9 is an explanatory view to explain a welding process in the embodiment, showing a sectional view along a line F-F in Fig. 7 (an enlarged view of a region corresponding to a part C in Fig. 3, before welding), in which the negative electrode plate 170 contacts with the negative current collector 130; and
Fig. 10 is an explanatory view to explain a welding process in the embodiment, showing an enlarged sectional view in which positive electrode plate 160 contacts with a positive current collector 120 (an enlarged view of a region corresponding to a part D in Fig. 3, before welding).

### BEST MODE FOR CARRYING OUT THE INVENTION

### (Preferred Embodiment)

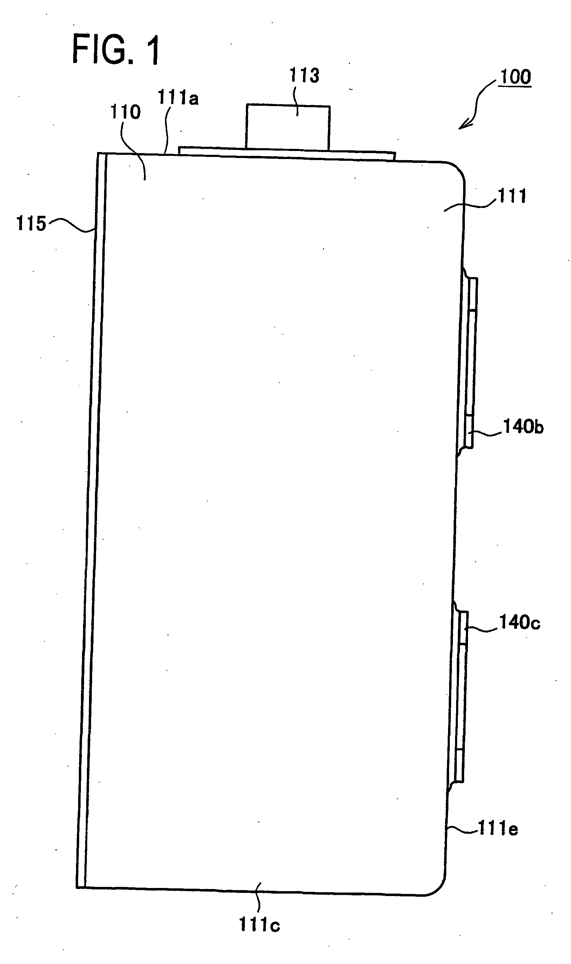

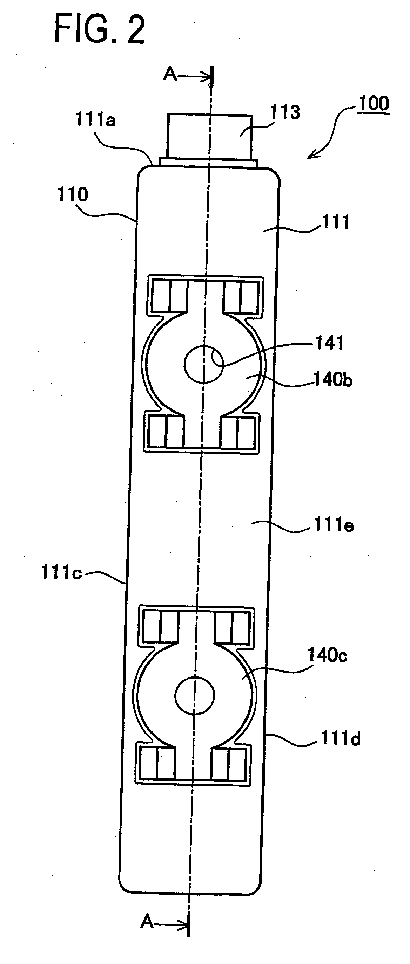

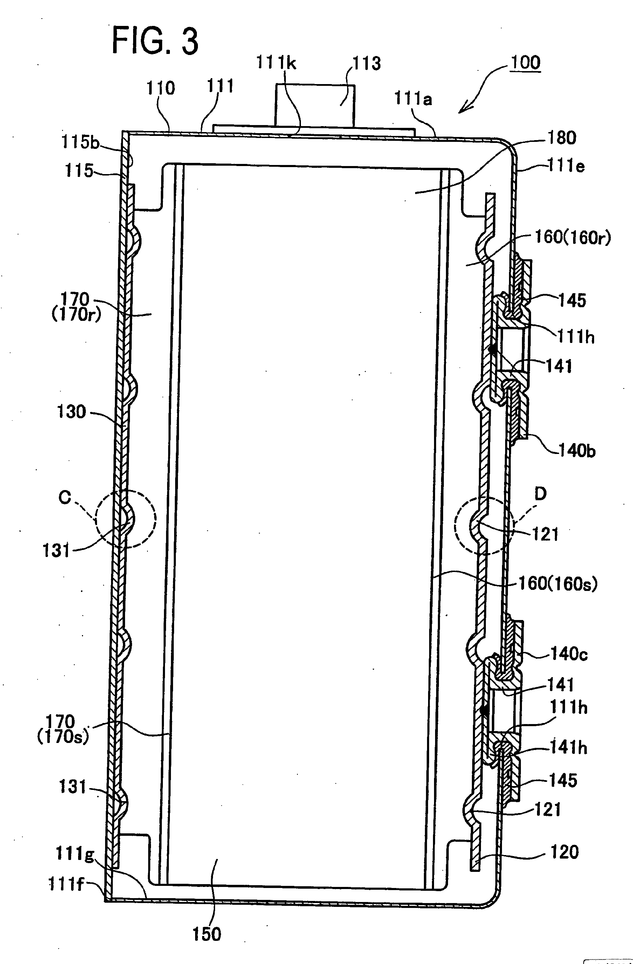

Fig. 1 is a front view of a battery 100 in a preferred embodiment; Fig. 2 is a side view thereof; and Fig. 3 is a sectional view thereof (corresponding to a sectional view along a line A-A in Fig. 2).

The battery 100 in this embodiment is a rectangular sealed nickel-metal hydride storage battery including a battery case 110 made of metal (specifically, a nickel-plated steel plate), a safety valve 113, an electrode plate assembly 150 (see Fig. 3) and an electrolyte (not shown) which are contained in the battery case 110. The electrolyte may be for example an alkaline aqueous solution containing KOH as a major component and having a specific gravity of 1.2 to 1.4.

The battery case 110 made of metal (specifically, a nickel-plated steel plate) has a rectangular box shape as shown in Fig. 3 including a battery housing 111 with a first side wall 111c to a third side wall 111e and a rectangular plate-like closing member 115. The third side wall 111e of the battery housing 111 (a right wall in Fig. 3) is formed with two through holes 111h. In each through hole 111h, a first positive terminal 140b or a second positive terminal 140c is inserted with an electrical isolating seal member 145 interposed therebetween. The closing member 115 is placed in contact with and welded, at the perimeter thereof, to an open end 111f (see Fig. 3) of the battery housing 111, thereby closing an opening 111g of the battery housing 111. Thus, the closing member 115 and the battery housing 111 are made integral with each other and form the battery case 110.

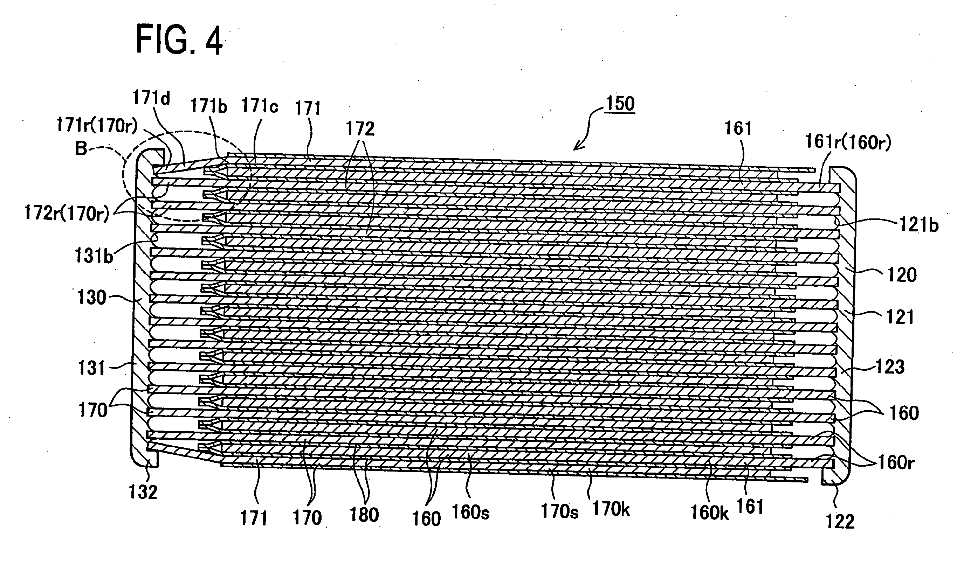

The electrode plate assembly 150 is configured as shown in Fig. 4 such that a plurality of positive electrode plates 160 of the same shape as each other and a plurality of negative electrode plates 170 of the same shape as each other are alternately laminated with separators 180 interposed therebetween.

Each positive electrode plate 160 has a positive electrode substrate 160k including a positive electrode filled portion 160s filled with a positive active material and a positive electrode joint end 160r unfilled with a positive active material. Each positive electrode plate 160 is arranged so that the positive electrode joint end 160r extends out in a predetermined direction (rightward in Fig. 4). In this embodiment, the positive electrode substrate 160k is a foamed nickel substrate and the positive active material is an active material containing nickel hydroxide.

Each negative electrode plate 170 has a negative electrode substrate 170k (such as a punching metal) including a negative electrode filled portion 170s filled with a negative active material and a negative electrode joint end 170r unfilled with a negative active material. Each negative electrode plate 170 is arranged so that the negative electrode joint end 170r extends out in an opposite direction (leftward in Fig. 4) to the positive electrode joint end 160r. In this embodiment, the negative active material is an active material containing hydrogen absorbing alloy and others. It is to be noted that a theoretical negative active material of a nickel-metal hydride storage battery is hydrogen, but a component filled in the negative electrode filled portion 170s is referred to as a negative active material for the sake of convenience.

Each separator 180 may be made of nonwoven fabric made of for example synthesized fiber subjected to a hydrophilic treatment.

As shown in Fig. 4, the positive electrode joint ends 160r of the positive electrode plates 160 are respectively connected, by electron beam welding or the like, to positive collector joint parts 121 of a current collector 120 of a rectangular plate form. Each joint part 121 is provided like a band extending in a lamination direction of the electrode plate assembly 150 (in a vertical direction in Fig. 4 and also herein simply referred to as a lamination direction). In this embodiment, as shown in Fig. 3, the positive collector joint parts 121 are provided in five positions in a longitudinal direction (a vertical direction in Fig. 3) of the positive electrode plates 160. In other words, each positive electrode plate 160 is welded to the positive current collector 120 at five points in the longitudinal direction. Furthermore, the positive current collector 120 is connected to the first positive electrode terminal 140b and the second positive electrode terminal 140c by laser welding or the like. Accordingly, the first positive electrode terminal 140b and the second positive electrode terminal 140c are electrically connected to the positive electrode plates 160.

On the other hand, the negative electrode joint ends 170r of the negative electrode plates 170 are respectively connected, by electron beam welding or the like, to negative collector joint parts 131 of a negative current collector 130 of a rectangular plate form. Each joint part 131 is provided like a band extending in the lamination direction of the electrode plate assembly 150 (in the vertical direction in Fig. 4). In this embodiment, as shown in Fig. 3, the negative collector joint parts 131 are provided in five positions in a longitudinal direction (the vertical direction in Fig. 3) of the negative electrode plates 170. In other words, each negative electrode plate 170 is welded to the negative current collector 130 at five points in the longitudinal direction. Furthermore, the negative current collector 130 is connected to the closing member 115 by electron beam welding or the like. Accordingly, in the battery 100 in the present embodiment, the battery case 110 including the closing member 115 entirely serves as a negative electrode.

Meanwhile, in the battery 100 in this embodiment, both the electrode plates of the electrode plate assembly 150 positioned in the outmost places (uppermost and lowermost places in Fig. 4) in the lamination direction (in the vertical direction in Fig. 4) are the negative electrode plates 170 (which are referred to as outermost negative electrode plates 171). If the two outermost negative electrode plates 171 are made in flat plate form extending straight as with other negative electrode plates (which are referred to as inside negative electrode plates 172) located between them, the negative electrode joint ends 171r of the outermost negative electrode plates 171 will be positioned outside the positive electrode joint ends 161r of outermost positive electrode plates 161 in the lamination direction. In this case, the size of the negative collector joint part 131 in the lamination direction has to be made larger than the size of the positive collector joint part 121 in the lamination direction and hence the size of the negative current collector 130 in the lamination direction becomes inevitably larger than the size of the positive current collector 120 in the lamination direction.

In this embodiment, on the other hand, each of the two outermost negative electrode plates 171 is bent at a bent portion 171b farther from the negative collector joint part 131 than the own negative electrode joint end 171r so that a near portion 171d extending from the bent portion 171b to the negative electrode joint end 171r is positioned inward in the lamination direction (toward the center in the vertical direction in Fig. 4) than a distant portion 171c positioned farther from the negative collector joint part 131 than the bent portion 171b. Accordingly, as compared with the case where each outermost negative electrode plate 171 has a flat plate form extending straight, the size of the negative collector joint part 131 in the lamination direction (the size in the vertical direction in Fig. 4) can be reduced. In this embodiment, the negative current collector 130 is designed to be equal in size in the lamination direction to the positive current collector 120. In addition, the positive current collector 120 and the negative current collector 130 are made so small as to be equal in size in the lamination direction to the electrode plate assembly 150, thereby achieving battery size reduction.

However, since the negative electrode plates 170 (the inside negative electrode plates 172 and the outermost negative electrode plates 171) constituting the electrode plate assembly 150 have the same shape as each other, the outermost negative electrode plates 171 having the above shape may not reach (may not be connected to) the negative collector joint part 131 well as compared with the inside negative electrode plates 172. In Patent Document 1, the joint ends of the first electrode plates (corresponding to the negative electrode plates 170 in the present embodiment) are connected to the current collector with the joining member such as a brazing material. This allows even the outermost first electrode plates of the same shape to be connected to the current collector with the brazing material or the like.

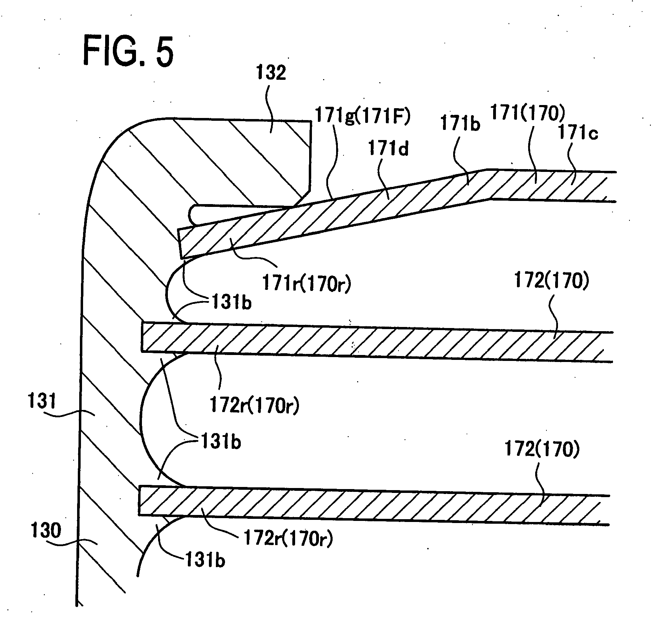

In the battery 100 of this embodiment, on the other hand, as shown in enlarged view in Fig. 5, the negative collector joint part 131 is connected to the negative electrode joint ends 172r of the inside negative electrode plates 172 with fillets 131b formed of metal melted from the negative collector joint part 131 itself and also connected to the negative electrode joint ends 171r of the outermost negative electrode plates 171 with fillets 131b formed of metal melted from the negative collector joint part 131 itself. In other words, in the battery 100 of this embodiment, the outermost negative electrode plates 171 as well as the inside negative electrode plates 172 are connected to the negative collector joint part 131 with the metal melted from the negative collector joint part 131 itself without using the joining member such as a brazing material. In this way, the negative electrode plates 170 are connected to the negative current collector 130 without use of the joining member such as a brazing material. It is therefore possible to eliminate the joining member such as a brazing material and also save the time for reflowing the brazing material, and hence to achieve cost reduction.

When the negative electrode joint ends 170r of the negative electrode plates 170 are connected to the negative collector joint parts 131 with the fillets 131b, the negative electrode plates 170 and the negative current collector 130 are connected firmly, providing higher connecting reliability between the negative electrode plates 170 and the negative current collector 130.

Furthermore, the positive electrode plates 160 constituting the electrode plate assembly 150 are also arranged as with the negative electrode plates 170 such that the positive electrode joint ends 160r of the positive electrode plates 160 are connected to positive collector joint parts 121 with fillets 121b formed of metal melted from the positive collector joint part 121 (see Fig. 4). Accordingly, on a positive electrode side, it is also possible to eliminate the joining member such as a brazing material and save the time for reflowing the brazing material, thus achieving further cost reduction. In addition, the positive electrode joint end 160r of each positive electrode plate 160 is connected to the positive collector joint part 121 with the fillets 121b. This enables firm connection between the positive electrode plates 160 and the positive current collector 120, thus providing higher connecting reliability between the positive electrode plates 160 and the positive current collector 120.

The negative current collector 130 further includes extended parts 132 as shown in Fig. 5, each of which extends toward a distant portion 171c of the outermost negative electrode plate 171 (rightward in Fig. 5). This extended part 132 is placed in contact with a near-portion outer surface 171g of the near portion 171d, of an outer surface 171f of the outermost negative electrode plate 171. It is therefore possible to appropriately hold the outermost negative electrode plate 171 so that the near portion 171d is positioned or directed inward (downward in Fig. 5) than the distant portion 171c in the lamination direction. The extended part 132 receives a force of the near portion 171d of the outermost negative electrode plate 171 that attempts to move outward in the lamination direction (upward in Fig. 5) by a restoring force of the bent portion 171b. Accordingly, any force is unlikely to be applied to the connecting portion (the fillets 131 and others) between the negative electrode joint end 171r of the outermost negative electrode plate 171 and the negative collector joint part 131, thus maintaining a good connecting relation. Although Fig. 5 shows only one of the two outermost negative electrode plates 171, the same applies to the other one.

The above battery 100 of this embodiment is manufactured as follows.

Firstly, the positive electrode substrate 160k made of foamed nickel is prepared and a predetermined region thereof is filled with a positive active material containing nickel hydroxide. This is then shaped into the positive electrode plate 160 having the positive electrode filled portion 160s comprised of the positive electrode substrate 160k filled with the positive active material and the positive electrode joint end 160r comprised of the positive electrode substrate 160k unfilled with the positive active material. The negative electrode substrate 170k made of punching metal is also prepared and a predetermined region thereof is filled with a negative active material containing hydrogen absorbing alloy or the like. This is then shaped into the negative electrode plate 170 having the negative electrode filled portion 170s comprised of the negative electrode substrate 170k filled with the negative active material and the negative electrode joint end 170r comprised of the negative electrode substrate 170k unfilled with the negative active material.

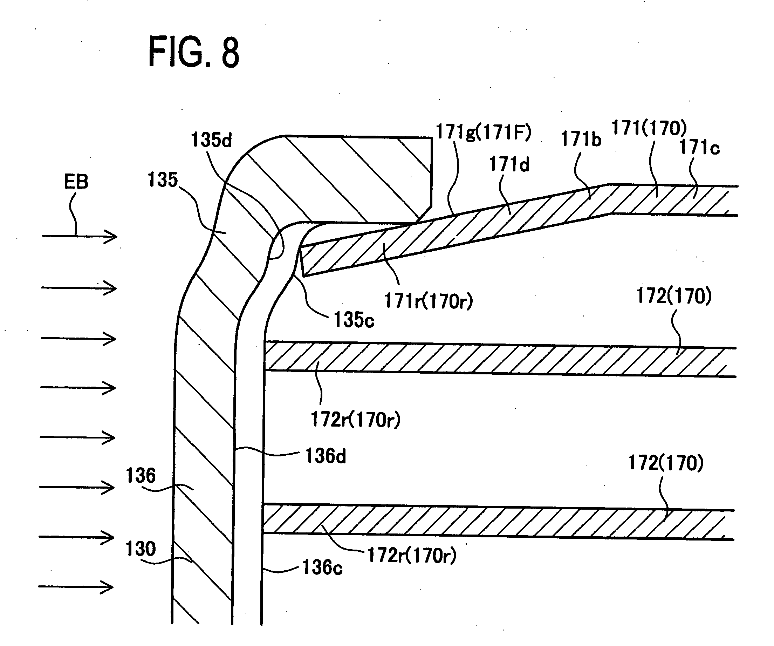

Secondly, the positive electrode plates 160 and the negative electrode plates 170 are alternately laminated with the separators 180 interposed therebetween. This is shaped under pressure into the electrode plate assembly 150. Of the negative electrode plates 170, each of the outermost negative electrode plates 171 located in outmost places in the lamination direction is previously bent at the bent portion 171b as shown in Fig. 8. The electrode plate assembly 150 is therefore shaped such that the near portion 171d is positioned or directed inward (downward in Fig. 8) in the lamination direction than the distant portion 171c.

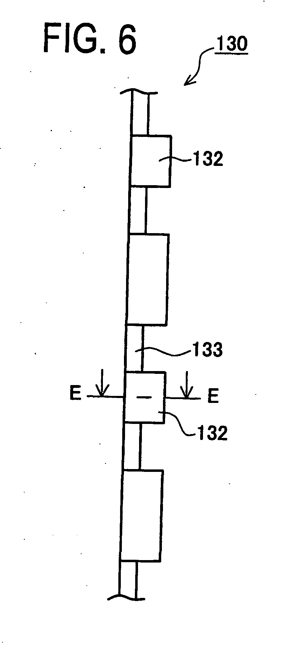

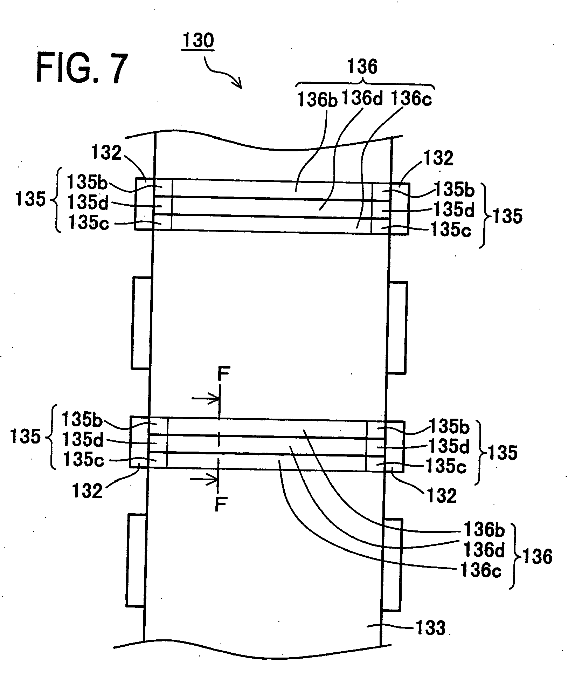

Furthermore, a rectangular flat plate-like nickel-plated steel plate is prepared and molded by press-molding into the negative current collector 130 including a flat plate-like body part 133 and the extended parts 132 each extending in bent form from both ends of the body part 133 in a short-side direction thereof as shown in Figs. 6 and 7. The body part 133 is however shaped to have, between the two extended parts 132 arranged side by side in the short-side direction (in a lateral direction in Fig. 7), with an inside part 136 with which the negative electrode joint ends 172r of the inside negative electrode plates 172 are placed in contact and two outermost parts 135 with which the negative electrode joint ends 171r of the outermost negative electrode plates 171 are placed in contact, as shown in Fig. 7.

To be more specific, as shown in Fig. 8 (corresponding to a sectional view along a line E-E in Fig. 6 and showing a state where the negative electrode plates 170 contact with the negative current collector 130), the outermost part 135 is designed to protrude toward the distant portion 171c of the outermost negative electrode plate 171 (rightward in Fig. 8) as compared with the inside part 136.

In this embodiment, five sets of the inside part 136 and the outermost parts 135 are formed at equal intervals (at positions corresponding to the collector joint parts 131) in the negative current collector 130 in the longitudinal direction (in the vertical direction in Figs. 6 and 7).

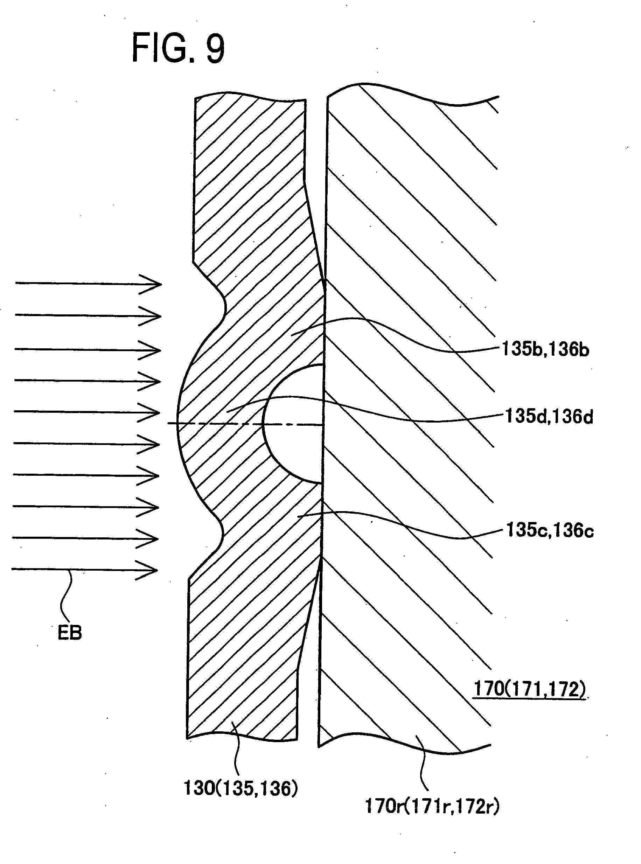

To be more concrete, as shown in Fig. 9 (corresponding to a sectional view along a line F-F in Fig. 7 and showing a state where the negative electrode plate 170 contacts with the negative current collector 130), the inside part 136 is shaped to have an inside recessed portion 136d recessed when viewed from the side of the negative electrode plate 170 (from the right in Fig. 9) and a first inside raised portion 136b and a second inside raised portion 136c which are arranged on both sides of the inside recessed portion 136d and raised toward the negative electrode plate 170 (to the right in Fig. 9). Similarly, the outermost parts 135 located on both sides of the inside part 136 are shaped respectively to have an outermost recessed portion 135d recessed when viewed from the side of the negative electrode plate 170 (from the right in Fig. 9) and a first outermost raised portion 135b and a second outermost raised portion 135c arranged on both sides of the outermost recessed portion 135d and raised toward the negative electrode plate 170 (to the right in Fig. 9).

In this embodiment, as shown in Fig. 7, the inside recessed portion 136d and the outermost recessed portions 135d located on both sides thereof are designed to be continuous like a band extending in the short-side direction of the negative current collector 130, that is, in the lamination direction (in the lateral direction in Fig. 7) of the electrode plate assembly 150. Similarly, the first inside raised portion 136b and the first outermost raised portions 135b located on both sides thereof are designed to be continuous like a band extending in the short-side direction of the negative current collector 130, that is, in the lamination direction (in the lateral direction in Fig. 7) of the electrode plate assembly 150. The second inside raised portion 136c and the second outermost raised portions 135c located on both sides thereof are also designed to be continuous like a band extending in the short-side direction of the negative current collector 130, that is, in the lamination direction (in the lateral direction in Fig. 7) of the electrode plate assembly 150.

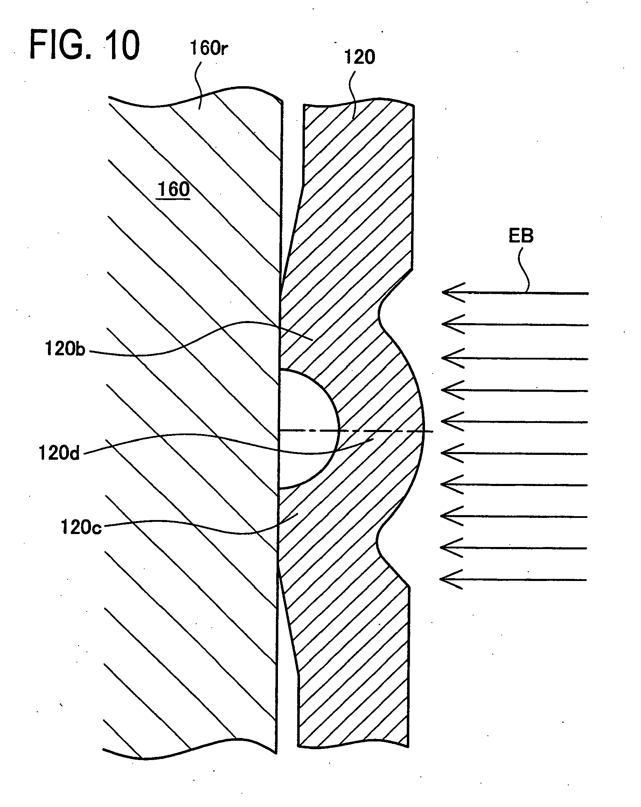

The rectangular flat plate-like nickel-plated steel plate is prepared and molded by press-molding into the positive current collector 120 including a flat plate-like body part 123 and extended parts 132 each extending in bent form from both ends of the body part 123 in a short-side direction thereof (in the vertical direction in Fig. 4). As shown in Fig. 10, this positive current collector 120 is also shaped to have a recessed portion 120d when viewed from the side of the positive electrode plate 160 (from the left in Fig. 10) and a first raised portion 120b and a second raised portion 120c which are arranged on both sides of the recessed portion 120d and raised toward the positive electrode plate 160 (to the left in Fig. 10). Furthermore, the recessed portion 120d, the first raised portion 120b, and the second raised portion 120c are formed like a band extending in the lamination direction (in a direction perpendicular to the drawing sheet of Fig. 10) between the two extended parts 122.

### (Welding Process)

Next, a welding process is conducted to weld the positive electrode plates 160 of the electrode plate assembly 150 to the positive current collector 120 and also weld the negative electrode plates 170 to the negative current collector 130.

Specifically, as shown in Figs. 8 and 9, the negative electrode joint ends 172r of the inside negative electrode plates 172 of the electrode plate assembly 150 are placed in contact with the first and second inside raised portions 136b and 136c of the inside part 136 of the negative current collector 130 and simultaneously the negative electrode joint end 171r of the outermost negative electrode plates 171 is placed in contact with the first and second raised portions 135b and 135c of the outermost part 135. At that time, as shown in Fig. 8, the outer surface 171g of the near portion 171d of the outermost negative electrode plate 171 is made contact with the extended part 132 of the negative current collector 130. This makes it possible to appropriately hold the outermost negative electrode plate 171 so that the near portion 171d is positioned or directed inward (downward in Fig. 8) in the lamination direction than the distant portion 171c.

Meanwhile, the negative electrode plates 170 (the inside negative electrode plates 172 and the outermost negative electrode plates 171) constituting the electrode plate assembly 150 are made equal in shape to each other. Accordingly, each outermost negative electrode plate 171 bent as above may not sufficiently reach the negative current collector 130 due to such a bent form as compared with the inside negative electrode plates 172. In this embodiment, therefore, the negative current collector 130 is designed so that the outermost part 135 which receives the negative electrode joint end 171r of the outermost negative electrode plate 171 protrudes toward the distant portion 171c of the outermost negative electrode plate 171 (to the right in Fig. 8) as compared with the inside part 136 which receives the negative electrode joint ends 172r of the inside negative electrode plates 172. As with the inside negative electrode plates 172, the outermost negative electrode plate 171 shaped in the bent form can appropriately contact with the negative current collector 130.

In this state, an electron beam EB is applied to the inside part 136 and the outermost parts 135 of the negative current collector 130 from an opposite side (the left side in Figs. 8 and 9) from the negative electrode plates 170 to melt the inside part 136 (the inside recessed portion 136d, first inside raised portions 136b, and second inside raised portion 136c) and the outermost part 135 (the outermost recessed portion 135d, first outermost raised portion 135b, and second outermost raised portion 135c). Accordingly, as shown in Fig. 5, the negative collector joint part 131 is connected not only to the negative electrode joint ends 172r of the inner negative electrode plates 172 with the fillets 131b but also to the negative electrode joint ends 171r of the outermost negative electrode plates 171 with the fillets 131b.

Since all of the negative electrode plates 170 are connected to the negative current collector 130 with the fillets 131b as above, the negative electrode plates 170 and the negative current collector 130 are connected firmly. Furthermore, the negative electrode plates 170 and the negative current collector 130 can be connected without use of the joining member such as a brazing material as in the conventional method. It is therefore possible to eliminate the need for the joining member such as a brazing material and save the time for reflowing the brazing material or the like in advance to the negative current collector 130, resulting in a manufacturing cost reduction.

Furthermore, as shown in Fig. 10, the positive electrode joint end 160r of the positive electrode plate 160 of the electrode plate assembly 150 is placed in contact with the first and second raised portions 120b and 120c of the positive current collector 120. In this state, an electron beam EB is applied to the positive current collector 120 from an opposite side (the right side in Fig. 10) from the positive electrode plate 160 to melt the recessed portion 120d, first raised portion 120b, and second raised portion 120c. Accordingly, as shown in Fig. 4, the positive collector joint part 121 is connected to the positive electrode joint ends 160r of the positive electrode plates 160 with the fillets 121b.

Since all of the positive electrode plates 160 are connected to the positive current collector 120 with the fillets 121b as above, the positive electrode plates 160 and the positive current collector 120 are connected firmly. Furthermore, the positive electrode plates 160 and the positive current collector 120 can be connected without use of the joining member such as a brazing material as in the conventional method. It is therefore possible to eliminate the need for the joining member such as a brazing material and save the time for reflowing the brazing material or the like, resulting in a manufacturing cost reduction.

In separate steps from above, as shown in Fig. 3, the first and second positive terminals 140b and 140c are fixed to the battery housing 111. Specifically, the seal members 145 are fitted in the through holes 111h of the battery housing 111 and cylindrical portions 141 of the first and second positive terminals 140b and 140c are inserted therein from outside. Fluid pressure is then applied to each cylindrical portion 141 to expand one end thereof toward the outside in a radial direction, and further compress and deform the one end in an axial direction, forming a compressively deformed portion 141h. Thus, the first and second positive terminals 140b and 140c are fixed to the battery housing 111 but electrically isolated from the battery housing 111.

Successively, the negative current collector 130 connected to the negative electrode plates 170 of the electrode plate assembly 150 is connected to an inner surface 115b of the closing member 115 by electron beam welding. This assembly is inserted from the positive current collector 120 side into the battery housing 111 through the opening 111g. At that time, the closing member 115 covers the battery housing 111. The closing member 115 and the battery housing 111 are connected by laser irradiation applied from outside, thereby sealing the battery housing 111. A laser beam is externally applied to a recess of the cylindrical portion 141 of each of the first and second positive terminals 140b and 140c to connect the compressively deformed portion 141h of each cylindrical portion 141 to the positive current collector 120. An electrolyte is poured through an inlet 111k positioned in a top part 111a of the battery housing 111 and then the safety valve 113 is attached to close the inlet 111k. Thereafter, a predetermined process such as initial charging is conducted, and the battery 100 is completed.

The present invention is explained in the embodiment, but not limited thereto, and the present invention may be embodied in other specific forms without departing from the essential characteristics thereof.

For instance, in the embodiment, the nickel-metal hydride storage battery is manufactured as the battery 100. The manufacturing method of the invention can be applied not only to the nickel-metal hydride storage battery but also to any types of batteries if only it is made by welding an electrode plate assembly including a plurality of laminated electrode plates to a current collector.

The embodiment explains the manufacturing method of the battery (the battery 100) including the metal battery case 110. The manufacturing method of the invention can be applied not only to such a battery with the metal battery case but also any batteries with battery cases made of other materials (e.g. resin).

## Claims

1. A battery (100) comprising:
an electrode plate assembly (150) including a plurality of first electrode plates (170) of the same shape as each other and a plurality of second electrode plates (160) different in electric potential from the first electrode plates (170), which are laminated alternately with separators (180) interposed therebetween; and
a current collector (130) connected to each of the first electrode plates (170) to collect electric charge from the first electrode plates (170), the current collector (130) including a collector joint part (131) of band-like shape extending in a lamination direction of the electrode plate assembly (150) and connected to a joint end (170r, 171r, 172r) of each first electrode plate (170);
wherein the plurality of first electrode plates (170) includes:
two outermost first electrode plates (171) located in outermost places in a lamination direction of the electrode plate assembly (150);
and
at least one inside first electrode plate (172) located between the two outermost first electrode plates (171);
each of the outermost first electrode plates (171) is designed to be bent at a bent portion (171b) farther from the collector joint part (131) than the joint end (170r, 171r, 172r) of each first electrode plate (170) so that a near portion (171d) extending from the bent portion (171b) to the joint end (171r) is positioned more inward in the lamination direction than a distant portion (171c) positioned farther from the collector joint part (131) than the bent portion (171b),
the collector joint part (131) is connected to the joint end (172r) of the inside first electrode plate (172) through a melted portion (131b) of the collector joint part (131) itself and connected to the joint end (171r) of each outermost first electrode plate (171) through a melted portion (131b) of the collector joint part (131) itself,
wherein the current collector (130) includes:
an inside part (136) with which the joint end (172r) of the inside first electrode plate (172) is placed in contact,
outermost parts (135) each of which is located outside the inside part (136) in the lamination direction of the electrode plate assembly (150) and protrudes inwards toward the distant portion (171c) of each outermost first electrode plate (171) so that the joint end (171r) of each outermost first electrode plate (171) is placed in contact with the collector joint part (131) at a respective outermost part (135),
wherein the melted portion (131b) is obtained by a welding process comprising applying an energy beam (EB), from an opposite side from the first electrode plates (170), to the inside part (136) placed in contact and connected to the joint end (172r) of the inside first electrode plate (172) and the outermost parts (135) placed in contact and connected to the joint ends (171r) of the outermost first electrode plates (171) and melting the inside part (136) and the outermost parts (135).

2. The battery (100) according to claim 1, wherein
the collector joint part (131) is connected to the joint end (172r) of the inside first electrode plate (172) with a fillet (131b) formed of metal melted from the collector joint part (131) itself and connected to the joint end (171r) of each outermost first electrode plate (171) with a fillet (131b) formed of metal melted from the collector joint part (131) itself.

3. The battery (100) according to claim 1 or 2, wherein
the current collector(130) includes an extended part (132) extending toward the distant portion (171c) of each outermost first electrode plate (171), the extended part (132) being configured to be in contact with an outer surface (171g) of the near portion (171d), which is included in an outer surface of each outermost first electrode plate (171) facing outward in the lamination direction, and to hold the outermost first electrode plate (171) so that the near portion (171d) is positioned inward in the lamination direction than the distant portion (171c).

4. A manufacturing method of a battery (100) comprising:
an electrode plate assembly (150) including a plurality of first electrode plates (170) of the same shape as each other and a plurality of second electrode plates (160) different in electric potential from the first electrode plates (170), which are laminated alternately with separators (180) interposed therebetween; and
a current collector(130) connected to each of the first electrode plates (170) to collect electric charge from the first electrode plates (170), the current collector (130) including a collector joint part (131) of band-like shape extending in a lamination direction of the electrode plate assembly (150) and connected to a joint end (170r, 171r, 172r) of each first electrode plate (170);
wherein the plurality of first electrode plates (170) includes:
two outermost first electrode plates (171) located in outermost places in a lamination direction of the electrode plate assembly (150);
and
at least one inside first electrode plate (172) located between the two outermost first electrode plates (171);
each of the outermost first electrode plates (171) is designed to be bent at a bent portion (171b) farther from the collector joint part (131) than the joint end (170r, 171r, 172r) of each first electrode plate (170) so that a near portion (171d) extending from the bent portion (171b) to the joint end (171r) is positioned more inward in the lamination direction than a distant portion (171c) positioned farther from the collector joint part (131) than the bent portion (171b),
the collector joint part (131) is connected to the joint end (172r) of the inside first electrode plate (172) through a melted portion (131b) of the collector joint part (131) itself and connected to the joint end (171r) of each outermost first electrode plate (171) through a melted portion (131b) of the collector joint part (131) itself,
wherein the current collector, before being connected to the first electrode plates (170), includes:
an inside part (136) with which the joint end (172r) of the inside first electrode plate (172) is placeable in contact, and
outermost parts (135) each of which is located outside the inside part (136) in the lamination direction of the electrode plate assembly (150) and protrudes inwards toward the distant portion (171c) of each outermost first electrode plate (171) so that the joint end (171r) of each outermost first electrode plate (171) is placeable in contact with the collector joint part (131) at the respective outermost part (135),
the method comprises a welding step for welding the current collector (130) and the first electrode plates (170), the welding step including:
placing the joint end (172r) of the inside first electrode plate (172) in contact with the inside part (136) of the current collector(130) and the joint ends (171r) of the outermost first electrode plates (171) in contact with the outermost parts (135) of the current collector (130),
applying an energy beam (EB) to the inside part (136) and the outermost parts (135) of the current collector (130) from an opposite side from the first electrode plates (170) to melt the inside part (136) and the outermost parts (135), and
forming the collector joint part (131) connected to the joint end (172r) of the inside first electrode plate (172) and connected to the joint ends (171r) of the outermost first electrode plates (171).

5. The battery manufacturing method according to claim 4, wherein the welding step includes forming the collector joint part (131) connected to the joint end (172r) of the inside first electrode plate (172) with a fillet (131b) and connected to the joint ends (171r) of the outermost first electrode plates (171) with a fillet (131b).

6. The battery manufacturing method according to claim 4 or 5, wherein
the current collector (130) includes an extended part (132) extending toward the distant portion (171c) of each outermost electrode plate (171),
the welding step includes: placing an outer surface (171g) of the near portion (171d), which is included in an outer surface of each outermost first electrode plate (171) facing outward in the lamination direction, into contact with the extended part (132); holding each outermost first electrode plate (171) so that the near portion (171d) is positioned inward in the lamination direction than the distant portion (171c); and applying the energy beam (EB) to the inside part (136) and the outermost parts (135) of the current collector (130) from the opposite side from the first electrode plates (170).

7. The battery manufacturing method according to any one of claims 4 to 6, wherein,
the inside part (136) of the current collector (130) before being connected includes an inside recessed portion (136d) recessed when viewed from an electrode plate assembly side and first and second raised portions (136b, 136c) arranged on both sides of the inside recessed portion (136d) and raised toward the electrode plate assembly (150), and
each of the outermost parts (135) of the current collector (135) before being connected includes an outermost recessed portion (135d) recessed when viewed from the electrode plate assembly side and first and second outermost raised portions (135b, 135c) arranged on both sides of the outermost recessed portion (135d) and raised toward the electrode plate assembly (150),
the welding step includes:
placing the joint end (172r) of the inside first electrode plate (172) in contact with the first and second inside raised portions (136b, 136c) and placing the joint ends (171r) of the outermost first electrode plates (171) in contact with the first and second outermost raised portions (135b, 135c), and
applying the energy beam (EB) to the inside part (136) and the outermost parts (136) from the opposite side from the first electrode plates (170).

## Patentansprüche

1. Batterie (100) mit
einer Elektrodenplattenanordnung (150), die eine Vielzahl von ersten Elektrodenplatten (170) der gleichen Form zueinander und eine Vielzahl von zweiten Elektrodenplatten (160), die ein unterschiedliches elektrisches Potential zu den ersten Elektrodenplatten (170) aufweisen, umfasst, die abwechselnd mit dazwischen zwischengebrachten Separatoren (180) geschichtet sind, und
einem Stromkollektor (130), der mit jeder der ersten Elektrodenplatten (170) verbunden ist, um eine elektrische Ladung von den ersten Elektrodenplatten (170) zu sammeln, wobei der Stromkollektor (130) einen Kollektorverbindungsteil (131) einer bandartigen Form umfasst, der sich in eine Schichtungsrichtung der Elektrodenplattenanordnung (150) erstreckt und mit einem Verbindungsende (170r, 171r, 172r) jeder ersten Elektrodenplatte (170) verbunden ist,
wobei die Vielzahl der ersten Elektrodenplatten (170) umfasst:
zwei äußerste erste Elektrodenplatten (171), die an äußersten Stellen in der Schichtungsrichtung der Elektrodenplattenanordnung (150) angeordnet sind,
und
zumindest eine innere erste Elektrodenplatte (172), die zwischen den zwei äußersten ersten Elektrodenplatten (171) angeordnet ist,
jede der äußersten ersten Elektrodenplatten (171) ausgelegt ist, bei einem Biegungsabschnitt (171b) weiter von dem Kollektorverbindungsteil (131) als das Verbindungsende (170r, 171r, 172r) jeder ersten Elektrodenplatte (170) gebogen zu sein, sodass ein naher Abschnitt (171d), der sich von dem Biegungsabschnitt (171b) zu dem Verbindungsende (171r) erstreckt, weiter innen in der Schichtungsrichtung positioniert ist als ein entfernter Abschnitt (171c), der weiter von dem Kollektorverbindungsteil (131) positioniert ist als der Biegungsabschnitt (171b),
der Kollektorverbindungsteil (131) mit dem Verbindungsende (172r) der inneren ersten Elektrodenplatte (172) durch einen geschmolzenen Abschnitt (131b) des Kollektorverbindungsteils (131) selbst verbunden ist und mit dem Verbindungsende (171r) jeder äußersten ersten Elektrodenplatte (171) durch einen geschmolzenen Abschnitt (131b) des Kollektorverbindungsteils (131) selbst verbunden ist,
wobei der Stromkollektor (130) umfasst:
einen inneren Teil (136), mit dem das Verbindungsende (172r) der inneren ersten Elektrodenplatte (172) in Kontakt versetzt ist,
äußerste Teile (135), von denen jeder außerhalb des inneren Teils (136) in der Schichtungsrichtung der Elektrodenplattenanordnung (150) angeordnet ist und nach innen hin zu dem entfernten Abschnitt (171c) jeder äußersten ersten Elektrodenplatte (171) herausragt, sodass das Verbindungsende (171r) jeder äußersten ersten Elektrodenplatte (171) in Kontakt mit dem Kollektorverbindungsteil (131) bei einem jeweiligen äußersten Teil (135) versetzt ist,
wobei der geschmolzene Abschnitt (131b) durch einen Schweißvorgang erhalten wird, der ein Aufbringen eines Energiestrahls (EB) von einem von den ersten Elektrodenplatten (170) entgegengesetzten Ende zu dem inneren Teil (136), der in Kontakt gebracht ist und mit dem Verbindungsende (172r) der inneren ersten Elektrodenplatte (172) verbunden ist, und den äußersten Teilen (135), die in Kontakt gebracht sind und mit den Verbindungsenden (171r) der äußersten ersten Elektrodenplatten (171) verbunden sind, und ein Schmelzen des inneren Teils (136) und der äußersten Teile (135) umfasst.

2. Batterie (100) nach Anspruch 1, wobei
der Kollektorverbindungsteil (131) mit dem Verbindungsende (172r) der inneren ersten Elektrodenplatte (172) verbunden ist, wobei ein Steg (131b) aus einem Metall gebildet ist, das von dem Kollektorverbindungsteil (131) selbst geschmolzen ist, und mit dem Verbindungsende (171r) jeder äußersten ersten Elektrodenplatte (171) verbunden ist, wobei ein Steg (131b) aus einem Metall gebildet ist, das von dem Kollektorverbindungsteil (131) selbst geschmolzen ist.

3. Batterie (100) nach Anspruch 1 oder 2, wobei
der Stromkollektor (130) einen verlängerten Teil (132) umfasst, der sich zu dem entfernten Abschnitt (171c) jeder äußersten ersten Elektrodenplatte (171) erstreckt, wobei der verlängerte Teil (132) konfiguriert ist, in Kontakt mit einer äußeren Oberfläche (171g) des nahen Abschnitts (171d) zu sein, die in einer äußeren Oberfläche jeder äußersten ersten Elektrodenplatte (171) beinhaltet ist, die in der Schichtungsrichtung nach außen blickt, und die äußerste erste Elektrodenplatte (171) so zu halten, dass der nahe Abschnitt (171d) weiter innen in der Schichtungsrichtung als der entfernte Abschnitt (171c) positioniert ist.

4. Herstellungsverfahren einer Batterie (100), die umfasst:
eine Elektrodenplattenanordnung (150), die eine Vielzahl von ersten Elektrodenplatten (170) der gleichen Form zueinander und eine Vielzahl von zweiten Elektrodenplatten (160), die ein zu den ersten Elektrodenplatten (170) unterschiedliches elektrisches Potential aufweisen, umfasst, die abwechselnd mit dazwischen zwischengebrachten Separatoren (180) geschichtet sind, und
einen Stromkollektor (130), der mit jeder der ersten Elektrodenplatten (170) verbunden ist, um eine elektrische Ladung von den ersten Elektrodenplatten (170) zu sammeln, wobei der Stromkollektor (130) einen Kollektorverbindungsteil (131) einer bandartigen Form umfasst, der sich in einer Schichtungsrichtung der Elektrodenplattenanordnung (150) erstreckt und mit einem Verbindungsende (170r, 171r, 172r) jeder ersten Elektrodenplatte (170) verbunden ist,
wobei die Vielzahl von ersten Elektrodenplatten (170) umfasst:
zwei äußerste erste Elektrodenplatten (171), die an äußersten Stellen in der Schichtungsrichtung der Elektrodenplattenanordnung (150) angeordnet sind,
und
zumindest eine innere erste Elektrodenplatte (172), die zwischen den zwei äußersten ersten Elektrodenplatten (171) angeordnet ist,
jede der äußersten ersten Elektrodenplatten (171) ausgelegt ist, bei einem Biegungsabschnitt (171b) weiter von dem Kollektorverbindungsteil (131) als das Verbindungsende (170r, 171r, 172r) jeder ersten Elektrodenplatte (170) gebogen zu sein, sodass ein naher Abschnitt (171d), der sich von dem Biegungsabschnitt (171b) zu dem Verbindungsende (171r) erstreckt, weiter innen in der Schichtungsrichtung positioniert ist als ein entfernter Abschnitt (171c), der weiter von dem Kollektorverbindungsteil (131) als der Biegungsabschnitt (171b) positioniert ist,
der Kollektorverbindungsteil (131) mit dem Verbindungsende (172r) der inneren ersten Elektrodenplatte (172) durch einen geschmolzenen Abschnitt (131b) des Kollektorverbindungsteils (131) selbst verbunden ist und mit dem Verbindungsende (171r) jeder äußersten ersten Elektrodenplatte (171) durch einen geschmolzenen Abschnitt (131b) des Kollektorverbindungsteils (131) selbst verbunden ist,
wobei der Stromkollektor, bevor er mit den ersten Elektrodenplatten (170) verbunden wird, umfasst:
einen inneren Teil (136), mit dem das Verbindungsende (172r) der inneren ersten Elektrodenplatte (172) in Kontakt platzierbar ist, und
äußerste Teile (135), von denen jeder außerhalb des inneren Teils (136) in der Schichtungsrichtung der Elektrodenplattenanordnung (150) angeordnet ist und nach innen hin zu dem entfernten Abschnitt (171c) jeder äußersten ersten Elektrodenplatte (171) herausragt, sodass das Verbindungsende (171r) jeder äußersten ersten Elektrodenplatte (171) in Kontakt mit dem Kollektorverbindungsteil (131) bei dem jeweiligen äußersten Teil (135) platzierbar ist,
wobei das Verfahren einen Schweißschritt zum Schweißen des Stromkollektors (130) und der ersten Elektrodenplatten (170) umfasst, wobei der Schweißschritt umfasst:
ein Platzieren des Verbindungsendes (172r) der inneren ersten Elektrodenplatte (172) in Kontakt mit dem inneren Teil (136) des Stromkollektors (130) und der Verbindungsenden (171r) der äußersten ersten Elektrodenplatten (171) in Kontakt mit den äußersten Teilen (135) des Stromkollektors (130),
ein Aufbringen eines Energiestrahls (EB) auf den inneren Teil (136) und die äußersten Teile (135) des Stromkollektors (130) von einer von den ersten Elektrodenplatten (170) entgegengesetzten Seite, um den inneren Teil (136) und die äußersten Teile (135) zu schmelzen, und
ein Bilden des Kollektorverbindungsteils (131), der mit dem Verbindungsende (172r) der inneren ersten Elektrodenplatte (172) verbunden ist und mit den Verbindungsenden (171r) der äußersten ersten Elektrodenplatten (171) verbunden ist.

5. Batterieherstellungsverfahren nach Anspruch 4, wobei der Schweißschritt ein Bilden des Kollektorverbindungsteils (131) umfasst, der mit dem Verbindungsende (172r) der inneren ersten Elektrodenplatte (172) mit einem Steg (131b) verbunden ist und der mit den Verbindungsenden (171r) der äußersten ersten Elektrodenplatten (171) mit einem Steg (131b) verbunden ist.

6. Batterieherstellungsverfahren nach Anspruch 4 oder 5, wobei
der Stromkollektor (130) einen verlängerten Teil (132) umfasst, der sich zu dem entfernten Abschnitt (171c) jeder äußersten Elektrodenplatte (171) erstreckt,
der Schweißschritt umfasst: ein Platzieren einer äußeren Oberfläche (171g) des nahen Abschnitts (171d), der auf einer äußeren Oberfläche jeder äußersten ersten Elektrodenplatte (171) beinhaltet ist, die nach außen in der Schichtungsrichtung blickt, in Kontakt mit dem verlängerten Teil (132); ein Halten jeder äußersten ersten Elektrodenplatte (171), sodass der nahe Abschnitt (171d) weiter innen in der Schichtungsrichtung als der entfernte Abschnitt (171c) positioniert ist; und ein Aufbringen des Energiestrahls (EB) zu dem inneren Teil (136) und den äußersten Teilen (135) des Stromkollektors (130) von der von den ersten Elektrodenplatten (170) entgegengesetzten Seite.

7. Batterieherstellungsverfahren nach einem der Ansprüche 4 bis 6, wobei
der innere Teil (136) des Stromkollektors (130), bevor er verbunden wird, einen inneren vertieften Abschnitt (136d), der, wenn er von einer Elektrodenplattenanordnungsseite betrachtet wird, vertieft ist, und erste und zweite erhobene Abschnitte (136b, 136c) umfasst, die auf beiden Seiten des inneren vertieften Abschnitts (136d) angeordnet sind und hin zu der Elektrodenplattenanordnung (150) erhoben sind, und
jeder der äußersten Teile (135) des Stromkollektors (135), bevor er verbunden wird, einen äußersten vertieften Abschnitt (135d), der, wenn er von der Elektrodenplattenanordnungsseite betrachtet wird, vertieft ist, und erste und zweite äußerste erhobene Abschnitte (135b, 135c) umfasst, die auf beiden Seiten des äußersten vertieften Abschnitts (135d) angeordnet sind und hin zu der Elektrodenplattenanordnung (150) erhoben sind,
wobei der Schweißschritt umfasst:
ein Platzieren des Verbindungsendes (172r) der inneren ersten Elektrodenplatte (172) in Kontakt mit den ersten und zweiten inneren erhobenen Abschnitten (136b, 136c) und ein Platzieren der Verbindungsenden (171r) der äußersten ersten Elektrodenplatten (171) in Kontakt mit den ersten und zweiten äußersten erhobenen Abschnitten (135b, 135c), und
ein Aufbringen des Energiestrahls (EB) auf den inneren Teil (136) und die äußersten Teile (136) von der von den ersten Elektrodenplatten (170) entgegengesetzten Seite.

## Revendications

1. Batterie (100) comprenant :
un ensemble de plaques d'électrode (150) comportant une pluralité de premières plaques d'électrode (170) de la même forme et une pluralité de deuxièmes plaques d'électrode (160) ayant un potentiel électrique différent de celui des premières plaques d'électrode (170), qui sont stratifiées alternativement avec des séparateurs (180) interposés entre celles-ci ; et
un collecteur de courant (130) relié à chacune des premières plaques d'électrode (170) pour collecter une charge électrique à partir des premières plaques d'électrode (170), le collecteur de courant (130) comportant une partie de jonction de collecteur (131) en forme de bande s'étendant dans une direction de stratification de l'ensemble de plaques d'électrode (150) et relié à une extrémité de jonction (170r, 171r, 172r) de chaque première plaque d'électrode (170) ;
où la pluralité de premières plaques d'électrode (170) comporte :
les deux premières plaques d'électrode les plus à l'extérieur (171) situées dans les emplacements les plus à l'extérieur dans une direction de stratification de l'ensemble de plaques d'électrode (150) ;
et
au moins une première plaque d'électrode intérieure (172) située entre les deux premières plaques d'électrode les plus à l'extérieur (171) ;
chacune des premières plaques d'électrode les plus à l'extérieur (171) est conçue pour être courbée au niveau d'une partie courbée (171b) plus loin de la partie de jonction de collecteur (131) que l'extrémité de jonction (170r, 171r, 172r) de chaque première plaque d'électrode (170) de sorte qu'une partie proche (171d) s'étendant de la partie courbée (171b) jusqu'à l'extrémité de jonction (171r) soit positionnée plus vers l'intérieur dans la direction de stratification qu'une partie éloignée (171c) positionnée plus loin de la partie de jonction de collecteur (131) que la partie courbée (171b),
la partie de jonction de collecteur (131) est reliée à l'extrémité de jonction (172r) de la première plaque d'électrode intérieure (172) à travers une partie fondue (131b) de la partie de jonction de collecteur (131) même et reliée à l'extrémité de jonction (171r) de chaque première plaque d'électrode la plus à l'extérieur (171) à travers une partie fondue (131b) de la partie de jonction de collecteur (131) même,
où le collecteur de courant (130) comporte :
une partie intérieure (136) avec laquelle l'extrémité de jonction (172r) de la première plaque d'électrode intérieure (172) est placée en contact,
les parties les plus à l'extérieur (135) dont chacune est située à l'extérieur de la partie intérieure (136) dans la direction de stratification de l'ensemble de plaques d'électrode (150) et fait saillie vers l'intérieur dans la direction de la partie éloignée (171c) de chaque première plaque d'électrode la plus à l'extérieur (171) de sorte que l'extrémité de jonction (171r) de chaque première plaque d'électrode la plus à l'extérieur (171) soit placée en contact avec la partie de jonction de collecteur (131) au niveau de la partie la plus à l'extérieur respective (135),
où la partie fondue (131b) est obtenue par un processus de soudage comprenant l'application d'un faisceau d'énergie (EB), à partir d'un côté opposé des premières plaques d'électrode (170), à la partie intérieure (136) placée en contact et reliée à l'extrémité de jonction (172r) de la première plaque d'électrode intérieure (172) et les parties les plus à l'extérieur (135) placées en contact et reliées aux extrémités de jonction (171r) des premières plaques d'électrode les plus à l'extérieur (171) et la fonte de la partie intérieure (136) et des parties les plus à l'extérieur (135).

2. Batterie (100) selon la revendication 1, dans laquelle
la partie de jonction de collecteur (131) est reliée à l'extrémité de jonction (172r) de la première plaque d'électrode intérieure (172) avec un congé de raccordement (131b) formé de métal fondu à partir de la partie de jonction de collecteur (131) même et reliée à l'extrémité de jonction (171r) de chaque première plaque d'électrode la plus à l'extérieur (171) avec un congé de raccordement (131b) formé de métal fondu à partir de la partie de jonction de collecteur (131) même.

3. Batterie (100) selon la revendication 1 ou 2, dans laquelle
le collecteur de courant (130) comporte une partie d'extension (132) s'étendant vers la partie éloignée (171c) de chaque première plaque d'électrode la plus à l'extérieur (171), la partie d'extension (132) étant configurée pour être en contact avec une surface extérieure (171g) de la partie proche (171d), qui est comprise dans une surface extérieure de chaque première plaque d'électrode la plus à l'extérieur (171) faisant face vers l'extérieur dans la direction de stratification, et pour maintenir la première plaque d'électrode la plus à l'extérieur (171) de sorte que la partie proche (171d) soit positionnée plus vers l'intérieur dans la direction de stratification que la partie éloignée (171c).

4. Procédé de fabrication d'une batterie (100) comprenant :
un ensemble de plaques d'électrode (150) comportant une pluralité de premières plaques d'électrode (170) de la même forme et une pluralité de deuxièmes plaques d'électrode (160) ayant un potentiel électrique différent de celui des premières plaques d'électrode (170), qui sont stratifiées alternativement avec des séparateurs (180) interposés entre celles-ci ; et
un collecteur de courant (130) relié à chacune des premières plaques d'électrode (170) pour collecter une charge électrique à partir des premières plaques d'électrode (170), le collecteur de courant (130) comportant une partie de jonction de collecteur (131) en forme de bande s'étendant dans une direction de stratification de l'ensemble de plaques d'électrode (150) et relié à une extrémité de jonction (170r, 171r, 172r) de chaque première plaque d'électrode (170) ;
où la pluralité de premières plaques d'électrode (170) comporte :
les deux premières plaques d'électrode les plus à l'extérieur (171) situées dans les emplacements les plus à l'extérieur dans une direction de stratification de l'ensemble de plaques d'électrode (150) ;
et
au moins une première plaque d'électrode intérieure (172) située entre les deux premières plaques d'électrode les plus à l'extérieur (171) ;
chacune des premières plaques d'électrode les plus à l'extérieur (171) est conçue pour être courbée au niveau d'une partie courbée (171b) plus loin de la partie de jonction de collecteur (131) que l'extrémité de jonction (170r, 171r, 172r) de chaque première plaque d'électrode (170) de sorte qu'une partie proche (171d) s'étendant de la partie courbée (171b) jusqu'à l'extrémité de jonction (171r) soit positionnée plus vers l'intérieur dans la direction de stratification qu'une partie éloignée (171c) positionnée plus loin de la partie de jonction de collecteur (131) que la partie courbée (171b),
la partie de jonction de collecteur (131) est reliée à l'extrémité de jonction (172r) de la première plaque d'électrode intérieure (172) à travers une partie fondue (131b) de la partie de jonction de collecteur (131) même et reliée à l'extrémité de jonction (171r) de chaque première plaque d'électrode la plus à l'extérieur (171) à travers une partie fondue (131b) de la partie de jonction de collecteur (131) même,
où le collecteur de courant, avant d'être relié aux premières plaques d'électrode (170), comporte :
une partie intérieure (136) avec laquelle l'extrémité de jonction (172r) de la première plaque d'électrode intérieure (172) peut être placée en contact, et
les parties les plus à l'extérieur (135) dont chacune est située à l'extérieur de la partie intérieure (136) dans la direction de stratification de l'ensemble de plaques d'électrode (150) et fait saillie vers l'intérieur dans la direction de la partie éloignée (171c) de chaque première plaque d'électrode la plus à l'extérieur (171) de sorte que l'extrémité de jonction (171r) de chaque première plaque d'électrode la plus à l'extérieur (171) puisse être placée en contact avec la partie de jonction de collecteur (131) au niveau de la partie la plus à l'extérieur respective (135),
le procédé comprend une étape de soudage qui consiste à souder le collecteur de courant (130) et les premières plaques d'électrode (170), l'étape de soudage comportant le fait :
de placer l'extrémité de jonction (172r) de la première plaque d'électrode intérieure (172) en contact avec la partie intérieure (136) du collecteur de courant (130) et les extrémités de jonction (171r) des premières plaques d'électrode les plus à l'extérieur (171) en contact avec les parties les plus à l'extérieur (135) du collecteur de courant (130),
d'appliquer un faisceau d'énergie (EB) à la partie intérieure (136) et les parties les plus à l'extérieur (135) du collecteur de courant (130) à partir d'un côté opposé des premières plaques d'électrode (170) pour faire fondre la partie intérieure (136) et les parties les plus à l'extérieur (135), et
de former la partie de jonction de collecteur (131) reliée à l'extrémité de jonction (172r) de la première plaque d'électrode intérieure (172) et reliée aux extrémités de jonction (171r) des premières plaques d'électrode les plus à l'extérieur (171).

5. Procédé de fabrication de batterie selon la revendication 4, dans lequel l'étape de soudage comporte le fait de former la partie de jonction de collecteur (131) reliée à l'extrémité de jonction (172r) de la première plaque d'électrode intérieure (172) avec un congé de raccordement (131b) et reliée aux extrémités de jonction (171r) des premières plaques d'électrode les plus à l'extérieur (171) avec un congé de raccordement (131b).

6. Procédé de fabrication de batterie selon la revendication 4 ou 5, dans lequel
le collecteur de courant (130) comporte une partie d'extension (132) s'étendant vers la partie éloignée (171c) de chaque plaque d'électrode la plus à l'extérieur (171),
l'étape de soudage comporte le fait : de placer une surface extérieure (171g) de la partie proche (171d), qui est comprise dans une surface extérieure de chaque première plaque d'électrode la plus à l'extérieur (171) faisant face vers l'extérieur dans la direction de stratification, en contact avec la partie d'extension (132) ; de maintenir chaque première plaque d'électrode la plus à l'extérieur (171) de sorte que la partie proche (171d) soit positionnée plus vers l'intérieur dans la direction de stratification que la partie éloignée (171c) ; et d'appliquer le faisceau d'énergie (EB) à la partie intérieure (136) et aux parties les plus à l'extérieur (135) du collecteur de courant (130) à partir du côté opposé des premières plaques d'électrode (170).

7. Procédé de fabrication de batterie selon l'une quelconque des revendications 4 à 6, dans lequel,
la partie intérieure (136) du collecteur de courant (130) avant d'être reliée comporte une partie évidée intérieure (136d) évidée lorsqu'on regarde depuis un côté de l'ensemble de plaques d'électrode et des première et deuxième parties surélevées (136b, 136c) disposées sur les deux côtés de la partie évidée intérieure (136d) et surélevées vers l'ensemble de plaques d'électrode (150), et
chacune des parties les plus à l'extérieur (135) du collecteur de courant (135) avant d'être reliée comporte la partie évidée la plus à l'extérieur (135d) évidée lorsqu'on regarde depuis le côté de l'ensemble de plaques d'électrode et des première et deuxième parties surélevées les plus à l'extérieur (135b, 135c) disposées sur les deux côtés de la partie évidée la plus à l'extérieur (135d) et surélevées vers l'ensemble de plaques d'électrode (150),
l'étape de soudage comporte le fait .
de placer l'extrémité de jonction (172r) de la première plaque d'électrode intérieure (172) en contact avec les première et deuxième parties surélevées intérieures (136b, 136c) et de placer les extrémités de jonction (171r) des premières plaques d'électrode les plus à l'extérieur (171) en contact avec les première et deuxième parties surélevées les plus à l'extérieur (135b, 135c), et
d'appliquer le faisceau d'énergie (EB) à la partie intérieure (136) et aux parties les plus à l'extérieur (136) à partir du côté opposé des premières plaques d'électrode (170).
